# EUROPÄISCHE PATENTSCHRIFT

(11) **EP 3 586 272 B1**
(45) Veröffentlichungstag und Bekanntmachung des Hinweises auf die Patenterteilung: **07.10.2020**
(21) Anmeldenummer: 17707225.3
(22) Anmeldetag: 22.02.2017
(51) Int. Cl.: G06K 19/07, G06K 19/077

(54) **BIDIREKTIONALER TRANSPONDER MIT GERINGEM ENERGIEVERBRAUCH**
BIDIRECTIONAL TRANSPONDER WITH LOW ENERGY USE
TRANSPONDEUR BIDIRECTIONNEL À FAIBLE CONSOMMATION D'ÉNERGIE

(43) Veröffentlichungstag der Anmeldung: 01.01.2020
(73) Patentinhaber: Reime, Gerd, 77815 Bühl (DE)
(72) Erfinder: Reime, Gerd, 77815 Bühl (DE)
(74) Vertreter: RPK Patentanwälte Reinhardt, Pohlmann und Kaufmann Partnerschaft mbB
(86) Internationale Anmeldenummer: PCT/EP2017/054022
(87) Internationale Veröffentlichungsnummer: WO 2017/148760

(56) Entgegenhaltungen:
- US-A1- 2008 136 594
- US-A1- 2013 176 111

## Beschreibung

Die Erfindung betrifft einen Transponder. Eine Anordnung und ein Verfahren für den Aufbau einer bidirektionalen Kommunikation nach dem Oberbegriff der Ansprüche 1, 10 und 11.

### Stand der Technik

Zur berührungslosen Identifikation von Objekten werden seit langem RFID-Systeme eingesetzt. Dabei geschieht die Kommunikation zwischen Lesegerät und Transponder mittels durch das Lesegerät erzeugter elektromagnetischer Wechselfelder oder durch Radiowellen. Passive Transponder entnehmen die benötigte Arbeitsenergie aus dem elektromagnetischen Feld des Lesegerätes. Daher ist ihre Reichweite entsprechend beschränkt. Für höhere Reichweiten setzt man auch batteriebetriebene Transponder ein. Dabei ist der Transponder nicht von der von der Lesestation abgestrahlten Energie zur Erzeugung seiner eigenen Sendeenergie abhängig.

Optische Systeme bilden eine weitere Variante eines Transponder-Systems, bei der die Kommunikation zwischen Lesegerät und Transponder auf optischer Basis erfolgt. Wie bei dem RFID-System setzt man auch hierfür höhere Reichweiten eine Batterie- oder Solarunterstützung ein. Im Prinzip arbeiten solche optische Systeme (im Folgenden "Opto-ID") ähnlich wie das bekannte RFID, zeigen jedoch deutliche Unterschiede in der Informationsübertragung. Optisch kann die übertragene Information zielgerichtet ausgesandt und auch zielgerichtet empfangen werden. Solange eine "Sichtverbindung" zwischen Lesegerät und Transponder besteht, ist eine Störung durch Metallumgebung oder andere Umwelteinflüssen (z.B. Feuchtigkeit, elektromagnetische Felder, Funkstörungen) ausgeschlossen. Ein Opto-ID Transponder kann somit z.B. bei einem Werkzeug oder auch an einem Container in einem Sackloch in massiven Metall untergebracht werden und dennoch Reichweiten von mehreren Metern problemlos gewährleisten. Ein weiterer Vorteil eines optischen ID-Systems ist die Sicherheit gegen unbefugtes Auslesen oder Personentracking. Im Gegensatz zum klassischen RFID kann z.B. ein optischer Transponder nicht unbemerkt "in der Hosentasche" gelesen werden.

Aus der US 2008/136594 A1 sind eine Vorrichtung und ein Verfahren zur Unterbrechung der Stromversorgung eines RFID-Systems mit einer Eingabe- und einer Aufweckeinheit bekannt. Eine Antenne empfängt ein Eingangssignal eines RFID-Lesegeräts. Die Eingabeeinheit demoduliert und verstärkt das Eingangssignal und gibt ein DC-Spannungssignal aus. Die Aufweckeinrichtung vergleicht die Spannung des DC-Spannungssignals der Eingabeeinheit mit einer vorgegebenen Referenzspannung und erzeugt ein High- oder ein Low-Signal. Bei einem High-Signal erfolgt eine Stromversorgung des RFID-Systems und der Datenaustausch kann beginnen. Gibt die Aufweckeinheit ein Low-Signal aus, unterbricht ein Schalter die Stromversorgung des RFID-Systems.

Ein Transponder eines RFID-Systems mit einer Aufweckeinheit ist aus der US 2013/0176111 A1 bekannt. Der RFID-Tag des RFID-Systems weist einen einstellbaren Detektionsbereich auf. Der RFID-Tag tastet die Größenordnung des Kommandosignals ab, welches von einem RFID-Empfänger empfangen wurde, und erzeugt eine Spannung entsprechend der Größenordnung des Kommandosignals. Anschließend wird der Detektionsbereich entsprechend der erzeugten Spannung angepasst und ein Antwortsignal auf das Kommandosignal auf den RFID-Empfänger gesendet. Ist der Abstand zwischen dem RFID-Empfänger und dem RFID-Tag größer bzw. kleiner, so wird der Detektionsbereich des RFID-Empfängers vergrößert bzw. verkleinert.

Aus der EP 2 332 269 B1 ist ein Verfahren für einen optischen Transponder bekannt. Dieses Prinzip ist in Fig. 4 dargestellt. Dabei sendet ein optischer Transponder 4.1 in regelmäßigen Abständen, z.B. alle 300 ms, mit einem optischen Sender 4.3 (Leuchtdiode) eine kurze optische Kennung 4.2 in Form von z.B. vier Bit ä 30 ns Pulslänge aus. Danach schaltet der Transponder 4.1 für eine kurze Zeit, z.B. 5 µs in den Empfangsmodus. Befindet sich ein Lesegerät 4.5 in der Nähe und empfängt die optische Kennung 4.2, so sendet es seinerseits optische Signale 4.10 aus, die vom Transponder 4.1 während der Zeit, in der er im Empfangsmodus ist, erfasst werden. Haben sich Lesegerät und Transponder erkannt, können sie weiterhin z.B. Sicherheitscodes austauschen, die es z.B. dem Lesegerät 4.5 erlauben, Informationen des Transponders 4.1 abzufragen bzw. Informationen auf den Transponder zu schreiben.

Es gibt grundsätzlich zwei Möglichkeiten, um einen optischen Transponder zu realisieren.

### Erste Möglichkeit:

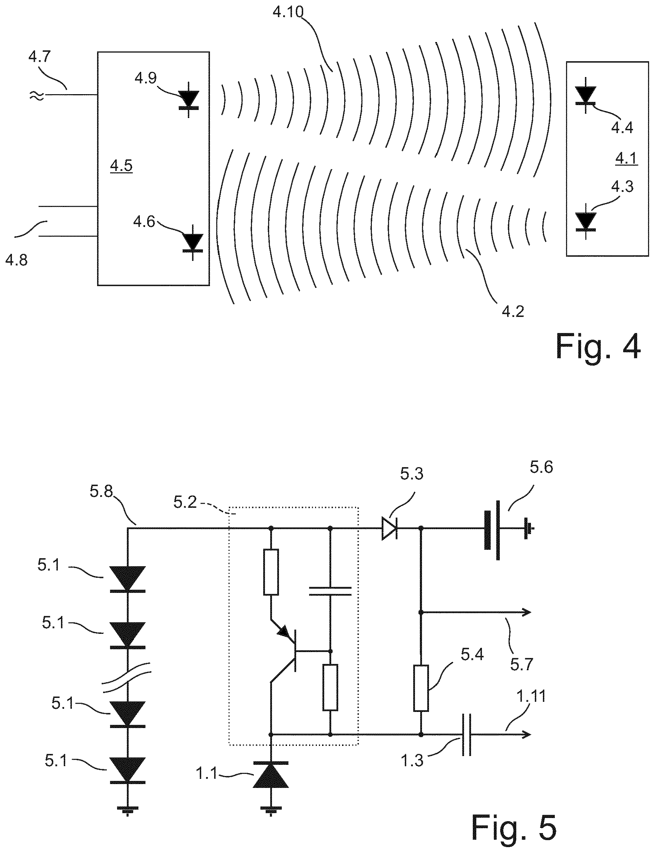

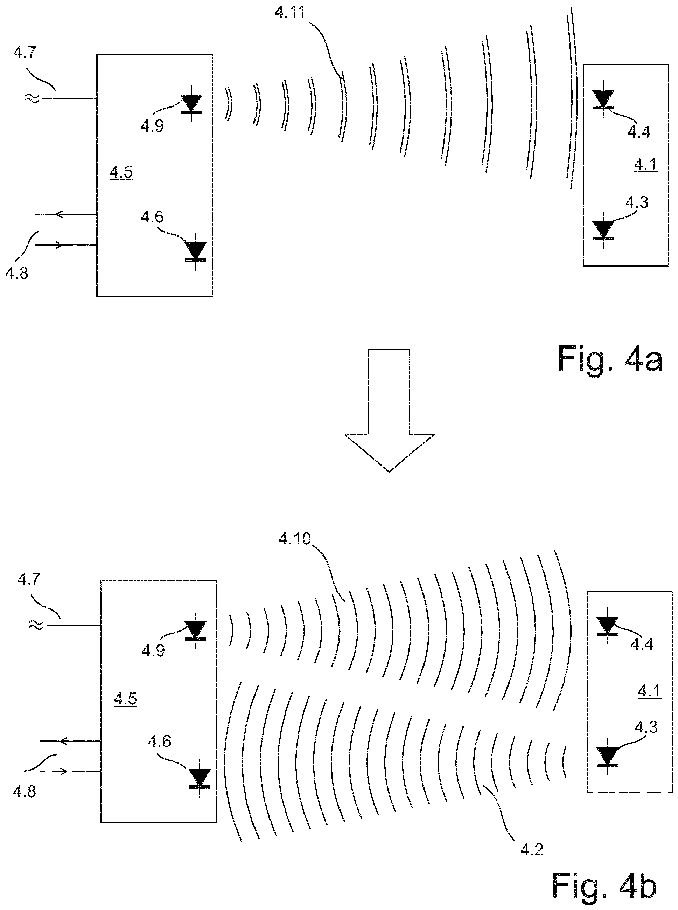

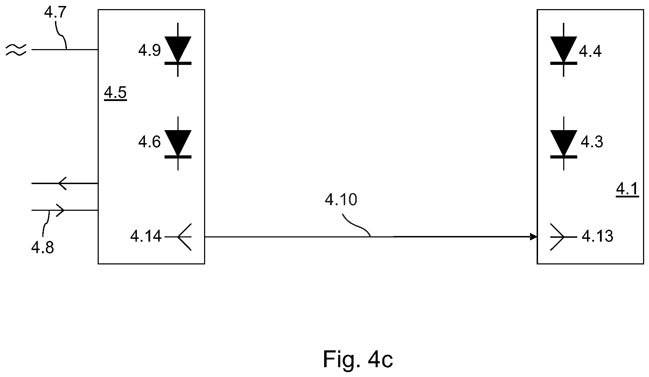

Der Transponder 4.1 in Fig. 4 sendet mit einem vorzugsweise optischen Sender 4.3 (Leuchtdiode) oder auch einem Funksender in vorbestimmten Zeitintervallen (z.B. 300 ms) Signale 4.2, z.B. eine optische Kennung, aus und schaltet danach für kurze Zeit (einige Mikrosekunden) einen Empfänger (Photodiode) 4.4 für z.B. optische Signale ein. (Natürlich kann ein Transponder auch nur senden, dann handelt es sich um eine Bake). Das Lesegerät 4.5 für den vorzugsweise optischen Transponder ist durch das Stromnetz 4.7 versorgt, so dass hier immer genügend Energie für Sender 4.9 und Empfänger 4.6 bereitsteht. Dabei ist der Empfänger 4.6 des Lesegerätes 4.5 für den Transponder 4.1 vorteilhaft dauernd eingeschaltet und wartet auf Signale 4.2 eines Transponders. Erreichen ihn diese, kann der (verschlüsselte) Datenverkehr 4.8 mit einem hier nicht näher beschriebenen Back-End System beginnen. Zum bidirektionalen Datenaustausch sendet das Lesegerät seinerseits optische Daten 4.10 oder Funkdaten an den Transponder 4.1, der diese in vorbestimmten Zeitfenstern empfängt und verarbeitet. Dies entspricht im Wesentlichen dem Verfahren nach dem Patent EP 2 332 269 B1. Durch das regelmäßige Aussenden einer Kennung wird Energie verbraucht. Auch wenn diese gemäß dem genannten Patent sehr gering ist, so ist sie doch während der Zeit, in der sich ein Transponder nicht in der Nähe eines Lesegerätes befindet, vergeudete Energie.

### Zweite Möglichkeit:

Und hier setzt die erfinderische Tätigkeit ein:
Gemäß Fig. 4a versucht der Transponder 4.1 durchgängig ein Signal 4.11 einer Leseeinheit 4.5 zu empfangen. Der Sender 4.3 des Transponders 4.1 bleibt aus, solange kein entsprechendes Signal 4.11 erfasst wird. Die Leseeinheit 4.5 sendet ein Signal 4.11, z.B. eine Kennung mit mindestens 1 Bit z.B. 20.000 mal pro Sekunde aus. Dieses mindestens eine Bit kann zum Beispiel ein Einzelimpuls mit einigen Mikrosekunden Länge sein. Erfasst die Empfangseinheit 4.4 des Transponders das Signal 4.11, so kann der (verschlüsselte) Datenverkehr 4.2 und 4.10 z.B. 200 ns nach erfasster Kennung beginnen. (Fig. 4b)
Vorteil: der Transponder kann auch bei sehr schnell bewegten Gütern eingesetzt werden. Er sendet nicht und "stört" nicht andere Systeme, wenn er nicht von einer Leseeinheit angesprochen wird. Er verbraucht deutlich weniger Strom - vorausgesetzt entsprechende Schaltungsmaßnahmen sind berücksichtigt. Werden dabei optische Signale verwendet, die damit auch gerichtet sind, kann es nicht zu Störungen mit anderen Datenstrecken kommen.

Bei der ersten der beiden Möglichkeiten wird bei optischer Übertragung die Photodiode nur für einen kurzen Moment (einige Mikrosekunden) in den Empfangsmodus gebracht. Dafür kann dann der Strom zur Erzeugung des Sperrzustandes aus der Batterie entnommen werden. So kann auch in einer Schaltungsvariante die Photodiode während der Zeit, in der sie nicht empfängt, als Generator verwendet werden. Bei Beleuchtung entsteht eine Spannung in Höhe der Sättigungsspannung von ca. 0,4 Volt als Generatorspannung, die in einem Kondensator zwischengespeichert wird. Die Spannung des Kondensators wird kurz vor der eigentlichen Messung invertiert der Photodiode zugeführt und versetzt sie dadurch in den Sperrzustand. Während des eigentlichen Datenempfangs wird der weitere Sperrvorgang durch die Batteriespannung aufrecht gehalten. In der Praxis hat sich gezeigt, dass für ein 3 bis 5 maliges Senden und Empfangen pro Sekunde mit je 30 - 50 Bit ein Versorgungsstrom des gesamten Transponders von 2 - 4 µA (3V) ausreicht.

Nachteilig hierbei ist, das der "Systemtakt", also der Zeitraum, in dem der Transponder sendet und kurz darauf empfängt, vom Transponder bestimmt wird. Im oben genannten Fall also alle 300 ms. Dies ist z.B. bei Containertracking oder ähnlichen Anwendungen nicht weiter problematisch, da hier genügend Zeit vorhanden ist. Anders verhält es sich beim Fließbandbetrieb. Hier stehen oft nur wenige Millisekunden zur Datenübertragung zur Verfügung.

Die zweite Möglichkeit - der Empfänger, z.B. die Photodiode oder ein Funkempfänger empfängt dauerhaft - kann ihre Vorteile nur ausspielen, wenn auch bei starkem Umgebungslicht kein wesentlicher Stromanteil aus der Batterie entnommen wird. Natürlich könnte der Transponder dauerhaft "empfangen" und somit auf jede Anfrage der Leseeinheit sofort antworten. Das dies bisher aber vor allem bei optischen Systemen noch nicht umgesetzt wurde, liegt an folgendem Problem: Die "Empfangseinheit" eines optischen Transponders ist eine Photodiode zur Umsetzung von Lichtmodulation in elektrischen Strom. Um die Grenzfrequenz einer Photodiode zu erhöhen, legt man an die Photodiode eine Spannung in Sperrrichtung an. Dadurch sinken die Kapazität der Photodiode und somit auch die Reaktionszeit. Bei Beleuchtung fließt dann ein der Beleuchtung proportionaler Strom, der zur Aufrechterhaltung der Sperrspannung aus der Batterie entnommen werden muss.

Bei Einfluss von Sonnenlicht direkt auf die Photodiode können bei Verwendung einer handelsüblichen BPW 34 einige mA notwendig sein, nur um die Photodiode dauerhaft im "Arbeitspunkt" zu halten. In dieser Anordnung würde die Batterie eines optischen Transponders insbesondere bei hohen Umgebungslichtstärken zu schnell entleert, ein sinnvoller Betrieb über einen längeren Zeitraum wäre somit ausgeschlossen. Erfolgt dies nicht, ginge die Photodiode bei Beleuchtung in den Sättigungszustand, das heißt, auch eine weitere Zunahme der Lichtleistung, z.B. durch Ansprechen durch ein Lesegerät, erzeugt kein auswertbares Signal.

Auch das Aufladen eines Kondensators mit der Generatorspannung der Photodiode (so wie oben beschrieben) kommt hier nicht in Betracht, da es ja keine "Messpausen" gibt.

Ausgehend von diesem Stand der Technik liegt der vorliegenden Erfindung die Aufgabe zu Grunde eine Vorrichtung und ein Verfahren zur Verfügung zu stellen, bei dem ein Transponder dauerhaft - also nicht nur in kurzen, vom Transponder selbst vorgegebenen Zeitintervallen - auf Anfragen einer Leseeinheit ohne wesentlichen Zeitverlust reagieren kann und dabei eine lange Betriebsdauer erreicht

Diese Aufgabe wird durch eine Vorrichtung, eine Anordnung und ein Verfahren mit den Merkmalen der unabhängigen Ansprüche gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Der Transponder weist wenigstens eine Aufweckeinheit und wenigstens einer Datenaustauscheinheit (Transpondereinheit) zur bidirektionalen Datenkommunikation mit wenigstens einem Lesegerät einer z.B. stationären Zugangskontrolleinrichtung auf. Der Transponder umfasst wenigstens einen Daten aussendenden Sender und wenigstens einen Empfänger, wobei der Sender zumindest zeitabschnittsweise Signale selbsttätig aussendet. Der Transponder weist wenigstens eine Photodiode auf. Die Aufweckeinheit ist als optische Aufweckeinheit dauerhaft für Signale zum Start der Datenkommunikation mittels der Datenaustauscheinheit zwischen Transponder und Lesegerät empfangsbereit ist. Mit der Schaltungsanordnung und den genannten Komponenten kann ein Transponder für eine Betriebsdauer von z.B. mehr als 10 Jahren mit einer handelsüblichen Knopfzelle (3V, 220mA) betrieben werden. Dies gilt bei einer optischen Datenübertragung auch bei starkem Fremdlicht oder Sonneneinstrahlung. Dauerhaft im Rahmen dieser Anmeldung bedeutet, dass der Transponder zu jeder Zeit empfangsbereit ist und es kein Zeitintervall gibt, z.B. nach einem Aktivierungszeitfenster des Transponders, in dem kein Empfang möglich ist. Gleichwohl kann grundsätzlich die Empfangsbereitschaft ausgesetzt werden, sobald die bidirektionale Datenkommunikation erfolgt.

Die Aufweckeinheit kann neben der wenigstens einen optische Aufweckeinheit auch wenigstens eine Funkaufweckeinheit umfassen, um durch eine Kombination zusätzliche Sicherheitskriterien z.B. beim Parken von Fahrzeugen in unsicherem Umfeld zu schaffen.

Die Datenaustaucheinheit kann vorteilhaft als wenigstens eine optische Datenaustauscheinheit oder als wenigstens eine Funkdatenaustauscheinheit ausgebildet werden, um den Anforderungen des jeweiligen technischen Umfelds gerecht zu werden.

In einem bevorzugten Ausführungsbeispiel weist der Transponder wenigstens eine Stromrichtungsverstärkerschaltung aufweist, die vorzugsweise sich selbst regelnde, unlineare Einzelstufen umfasst. Mit dieser Schaltung lässt sich mit geringem Strom eine dauerhafte Empfangsbereitschaft des Transponders gewährleisten, so dass dieser auch nur mit einer Solarzelle oder einer kleinen Batterie lange Zeit betrieben werden kann.

Es ist ebenso vorteilhaft, den Transponder mit wenigstens einer Stromsparschaltung zu betreiben. In einem besonders bevorzugten Ausführungsbeispiel wird eine Photostromkompensation durch Begrenzung der Photodioden-Generatorspannung zwischen Null und Sättigung durch Bedämpfung mit einem frequenzabhängigen Widerstand vorgesehen. Diese Kombination verringert den erforderlichen Strom noch weiter.

Die Stromsparschaltung kann besonders bevorzugt auch als eine Photostromkompensation durch Kompensation mit dem Strom aus einer Anzahl weiterer, elektrisch entgegengesetzt gepolter Photodioden mittels frequenzabhängigem Widerstand ausgebildet werden. So kann mit wenigen günstigen Bauteilen eine äußerst Strom sparende Ausgestaltung erreicht werden.

Die Stromsparschaltung ist vorzugsweise dazu bestimmt und geeignet, den Transponder mit einer Batterie, vorzugsweise einer Knopfzelle, trotz der dauerhaften Signalempfangsbereitschaft mehrere Jahre zu betreiben. Alternativ kann vorteilhaft auch eine Solarzelle verwendet werden. Bei dem geringen Strombedarf sind beide Alternativen alleine oder in Kombination günstig einsetzbar.

Vorzugsweise ist der Transponder nach Eingang eines ersten Signals schnell aufzuwecken. Dies geschieht in einem bevorzugten Ausführungsbeispiel in einer Zeit vom Empfang eines Signals der Aufweckeinheit bis zum Start der gerichteten Datenkommunikation der Datenaustauscheinheit zwischen Transponder und Lesegerät von weniger als einer Mikrosekunde, vorzugsweise weniger als 200 Nanosekunden.

Die Aufgabe wird auch durch eine Anordnung zur bidirektionalen Kommunikation zwischen einem bereits hinsichtlich seiner Vorteile beschriebenen Transponder und einem Lesegerät gelöst, das Signale zum Start der Datenkommunikation an eine dauerhaft empfangsbereite Aufweckeinheit des Transponders sendet zum Aufwecken einer Datenaustauscheinheit des Transponders. Das Zusammenspiel zwischen Lesegerät und Transponder wird dabei aufeinander abgestimmt und gestattet einen Energie sparenden Betrieb.

Die Aufgabe wird auch gelöst durch ein Verfahren zur bidirektionalen Datenkommunikation eines Transponders mit wenigstens einem Lesegerät, wobei der Transponder wenigstens einen Daten aussendenden Sender und wenigstens einen Empfänger aufweist. Vom Lesegerät wird ein Signal zum Transponder gesendet, das durch den Transponder erkannt wird. Nach Erkennung des Signals startet eine bidirektionalen Kommunikation mittels wenigstens einer Datenaustauscheinheit des Transponders mit Sender und Empfänger mit dem Lesegerät, wobei der Sender zumindest zeitabschnittsweise Signale selbsttätig aussendet. Nach dem Erkennen des Signals wird dazu die Datenaustauscheinheit zum Start der bidirektionalen Kommunikation durch eine dauerhaft empfangsbereite optische Aufweckeinheit des Transponders aufgeweckt. Der Transponder wird dabei mittels wenigstens einer Photodiode betrieben. Dadurch kann Energie sparend eine Datenkommunikation betrieben werden, wobei sich die oben hinsichtlich der Vorrichtung beschriebenen Vorteile einstellen.

Zur weiteren Energieeinsparung wird in einem bevorzugten Ausführungsbeispiel die Stromrichtung des vom Transponder empfangenen Signals im Transponder verstärkt.

Wir in einem weiteren Ausführungsbeispiel vorteilhaft als Stromsparschaltung eine Photostromkompensation verwendet, die eine Photodioden-Generatorspannung zwischen Null und Sättigung durch Bedämpfung mit einem frequenzabhängigen Widerstand begrenzt, lässt sich der Strombedarf weiter verringern und dadurch eine für den Anwender bequeme, weil wartungsfreie Datenkommunikation einrichten..

Vorzugsweise kompensiert die Photostromkompensation den Strom mit dem Strom aus einer Anzahl weiterer, elektrisch entgegengesetzt gepolter Photodioden mittels eines frequenzabhängigen Widerstands, so dass mit günstigen Bauteilen der Energieaufwand verringert werden kann.

Ergänzend kann vorzugsweise die Aufweckeinheit mit einer Solarzelle und/oder einer Batterie, vorzugsweise einer Knopfzelle, trotz der dauerhaften Signalempfangsbereitschaft mehrere Jahre betrieben werden, was die Wartungsfreiheit des Transponders weiter steigert.

Dennoch steht die Datenkommunikation nach dem Aufwecken vorzugsweise sehr schnell zu Verfügung. So beginnt die bidirektionale Datenkommunikation in einer Zeit vom Empfang eines Signals der Aufweckeinheit bis zum Start der Datenkommunikation von weniger als einer Mikrosekunde, vorzugsweise kleiner als 200 Nanosekunden.

Um dies alles zu gewährleisten, werden nicht alleine der Empfänger wie die Photodiode fast stromfrei im Arbeitspunkt gehalten, sondern es können auch weitere Maßnahmen an den Verstärkerschaltungen vorgenommen werden, um auf einen so geringen Stromverbrauch zu kommen, wie es ein Betrieb von mehr als 10 Jahren erforderlich macht.

Weitere Vorteile ergeben sich aus den Unteransprüchen und der nachfolgenden Beschreibung bevorzugter Ausführungsbeispiele.

Im Folgenden wir die Erfindung an Hand von in den beigefügten Figuren dargestellten Ausführungsbeispielen näher erläutert. Es zeigen:
- Fig. 1: eine Schaltungsanordnung mit einer Photodiode 1.1 als bedämpftem Generator,
- Fig. 2: eine Schaltungsanordnung für einen Stromrichtungsverstärker,
- Fig. 3: ein Blockschaltbild für einen optischen Transponder,
- Fig. 4: eine schematische Darstellung von Transponder und Lesegerät mit Sender und Empfänger,
- Fig. 4a - 4c: Darstellung der Datenübertragung zur Einrichtung eines bidirektionalen Transponder-Betriebs,
- Fig. 5: eine Schaltungsanordnung im Fall einer vorhandenen Energiequelle in Form von Photodioden,
- Fig. 6: Zeit- und Spannungsverläufe an den Komponenten der Schaltungsanordnungen.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Für die Darstellung der Erfindung wird von folgender Überlegung ausgegangen: um eine Photodiode dauerhaft bei Beleuchtung im Sperrzustand zu halten und dadurch schnelle Reaktionszeiten zu erhalten, braucht man entweder eine Energiequelle oder man verzichtet auf schnelle Reaktionszeiten. Letzteres gilt auch bei einem Funkempfänger.

Fig. 5 zeigt die Schaltungsanordnung im Fall einer vorhandenen Energiequelle in Form von Photodioden 5.1 oder Solarzellen. Auf die alternativen Lösungen mit einer Funkübertragung oder mit gekoppelten optischen und Funkübertragungen wird weiter unten eingegangen.

Will man die Energie nicht aus der Batterie entnehmen, kann man eine oder mehrere Photodioden 5.1 oder Solarzellen in der Nähe der Photodiode 1.1 anbringen, die als Generator die entsprechende Stromleistung zur Kompensation des Photostroms liefern. Eine Anzahl Photodioden 5.1 oder entsprechende Solarzellen produziert z.B. bei Lichteinstrahlung eine Spannung 5.8 von 2,4 V. Die Photodiode 1.1 ist in Sperrrichtung über einen Gyrator 5.2 an diese Spannung 5.8 angeschlossen. Nehmen wir an, über dem Gyrator 5.2 fällt eine Spannung von 0,8V ab, so verbleibt als Sperrspannung an der Photodiode 1.1 noch 1,6 Volt. Diese reicht vollkommen aus, um eine Bandbreite von mehr als 15 MHz zu erreichen. Die Signalspannung der Photodiode wird dann an 1.11 abgenommen, der Koppelkondensator 1.3 dient nur zur DC-Entkopplung.

Je stärker das Umgebungslicht und somit auch der Photostrom durch 1.1 werden, umso größer wird auch der von den Photodioden 5.1 zur Verfügung gestellte Strom werden. Im Falle völliger Dunkelheit - bei der ja die Photodioden 5.1 oder Solarzellen keine Spannung erzeugen, fließt auch kein Photostrom durch die Photodiode 1.1. Um trotzdem die Sperrspannung aufrecht zu erhalten, wird von der Versorgungsspannung 5.7 ein hochohmiger Widerstand 5.4 zur Kathode der Photodiode geschaltet. Hochohmig bedeutet, zwischen einigen Hundert Kilo- bis zig Mega-Ohm. Im Idealfall fließt über diesen Widerstand 5.4 so gut wie kein Strom.

Bei Licht auf den Photodioden oder Solarzellen 5.1 kann die erzeugte Spannung 5.8 auch zum Laden eines Energiespeichers 5.6 verwendet werden. Eine Reverse-Diode 5.3 verhindert den Stromrückfluss bei unbeleuchteten Photodioden 5.1 oder Solarzellen. Der Energiespeicher 5.6 kann ein Akkumulator sein, wenn der Transponder auch längere Zeit ohne Energieeintrag durch die Photodioden 5.1 betrieben werden soll, oder ein relativ kleiner Kondensator, wenn zum Beispiel das Lesegerät den Transponder durch eine Lichtquelle direkt mit der für die Datenübertragung notwendigen Energie speist.

Diese Schaltungsanordnung macht überall da Sinn, wo im Transponder genügend Fläche für Photodioden 5.1 oder Fotozellen zur Verfügung steht bzw. wo es auf Kosten für diese zusätzlichen Bauelemente nicht ankommt.

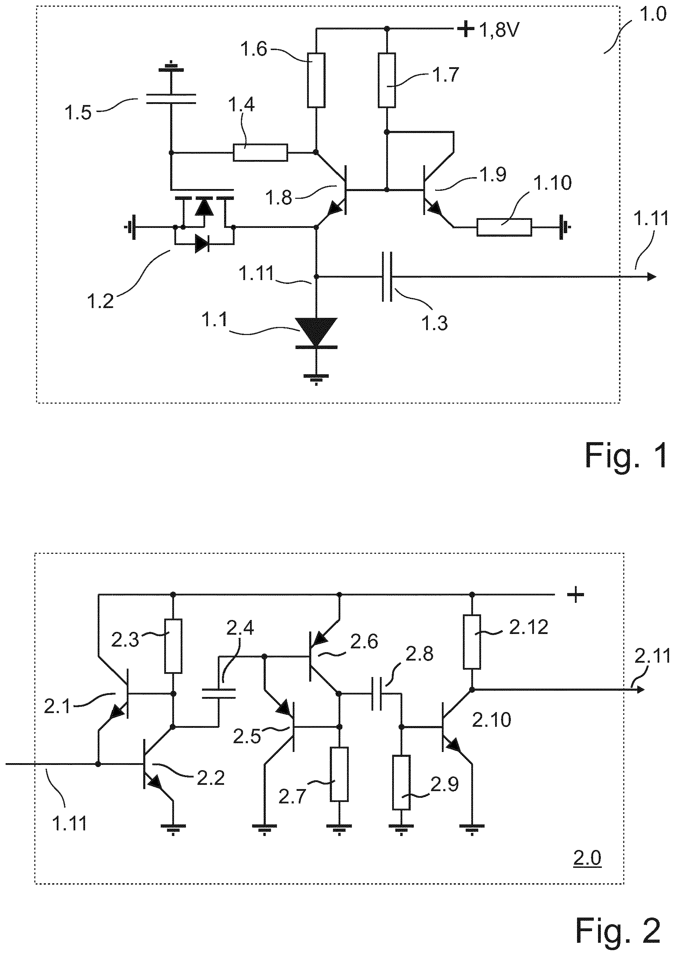

Jedoch gibt es auch Transponderanwendungen, bei denen nicht genug Platz vorhanden ist, z.B. wenn Photodiode und Sende-LED mit in einem ASIC integriert werden müssen. In diesem Fall wird gemäß Fig. 1 die Photodiode 1.1 als bedämpfter Generator betrieben. Ohne Bedämpfung würde bei Lichteinfluss die Spannung an der Photodiode 1.1 in die Sättigung gehen, d.h. an der Anode würden ca. 0,4 Volt anliegen. Wird die Spannung im Generatorbetrieb dagegen über einen frequenzabhängigen Widerstand auf einen Wert zwischen 0 und kleiner 0,4 Volt gehalten, kann an der Anode bei Beleuchtungsänderung, im dargestelltem Fall also vom optischen Signal 4.11 kommend, ein Signal 1.11 abgenommen werden. In Fig. 1 dient ein Transistor 1.8 als Schwellwertregler, wenn die Gleichspannung an der Photodiode 1.1 einen vorbestimmten Wert überschreitet. Die Höhe des Schwellwertes wird mit dem Spannungsteiler (Widerstand 1.7), dem Transistor 1.9 und dem Widerstand 1.10 festgelegt. Transistor 1.9 dient lediglich als Temperaturkompensation für den Transistor 1.8. Die Werte der Widerstände 1.7 und 1.10 sind so bemessen, das am Widerstand 1.10 eine Spannung von ca. 0,2 Volt ansteht. Übersteigt die Spannung am Emitter von Transistor 1.8 die Spannung wegen Lichteinfluss auf die Photodiode 1.1, so steigt die Spannung am Kollektor von Transistor 1.8 an. Ab einer bestimmten Spannung öffnet der als regelbarer Widerstand anzusehende Feldeffekttransistor 1.2 und entnimmt der Photodiode 1.1 so viel Strom, bis wieder die gleiche Spannung wie am Widerstand 1.10 ansteht. Dieser Regelkreis weist durch den Widerstand 1.4 und den Kondensator 1.5 ein Tiefpassverhalten auf, so dass tieffrequente Wechselanteile ausgeregelt werden und höherfrequente Wechselanteile 1.11 über den Koppelkondensator 1.3 an die nachfolgenden Verstärkerstufen geleitet werden können.

Vorteilhaft können bei dieser Schaltungsvariante hochohmige Widerstände eingesetzt werden. So beträgt der Wert von Widerstand 1.6 und 1.7 je 22MOhm. Der Wert von Widerstand 1.10 errechnet sich bei einer gegebenen Versorgungsspannung von z.B. 1.8 Volt aus dem Spannungsteilerverhältnis von Widerstand 1.7, dem Spannungsabfall an Transistor 1.9 (ca. 0,5 Volt) und dem Spannungsabfall an Widerstand 1.10. Nehmen wir Widerstand 1.10 zu 4,7 MOhm, so ergibt sich an diesem Widerstand eine Spannung von ca. 0,23 Volt. Nehmen wir weiterhin an, das der Feldeffekttransistor 1.2 bei einer Gatespannung von 0,8 Volt öffnet, so fällt am Widerstand 1.6 1 Volt ab. Somit ergibt sich ein Strom von 45 nA durch den Widerstand 1.6 und 49 nA durch den Widerstand 1.7, zusammen also ca. 94 nA für die Photostromregelung 1.0.

Der Wert des Widerstandes 1.4 kann auch im Mega-Ohm Bereich liegen, er dient mit dem Kondensator 1.5 (1nF) nur als Tiefpass für die Gate-Steuerspannung von Transistor 1.2.

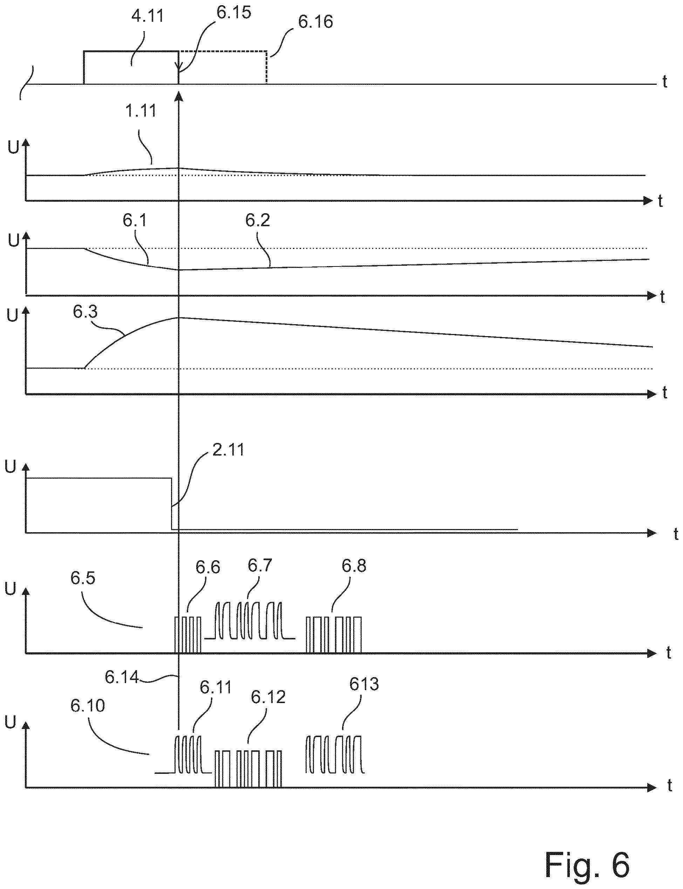

Für den Verstärker 2.0 (Fig. 2) werden sich selbst regelnde, bewusst unlineare Einzelstufen gewählt. Hierbei handelt es sich um Stromrichtungsverstärker. Das bedeutet, eine schnelle Stromverstärkung erfolgt im Wesentlichen nur in eine Richtung. Transistor 2.2, 2.1 und Widerstand 2.3 bilden eine erste Stufe. Bei der hier gezeigten Schaltung regelt sich die Kollektorspannung von Transistor 2.2 auf eine Spannung ein, die zwei Mal der BasisEmitterspannung eines Einzeltransistors ist, also 2 x 0,5 Volt = ca. 1 Volt. Es sei gleich vorausgestellt, das der Widerstand 2,3 relativ hochohmig sei, z.B. 22 MOhm. Daher ist der Basisstrom des Transistors 2.2 bzw. der Emitterstrom des Transistors 2.1 sehr gering. Bei diesem geringen Emitterstrom in Transistor 2.1 überwiegt in erster Linie die Basis-Emitterkapazität von Transistor 2.1 als frequenzbestimmende Gegenkopplung für den eigentlichen Verstärkertransistor 2.2, jedoch nur so lange, wie Transistor 2.1 im schwach leitenden Zustand ist. Ein positiver Strompuls an der Basis von Transistor 2.2, wie ihn die Signalspannung 1.11 der Photodiode bei Einfluss des optischen Signals 4.11 erzeugt, lässt die Spannung am Kollektor entsprechend schnell sinken (6.1 in Fig. 6), so dass auch die Gegenkopplungskapazität durch die Basis-Emitterstrecke von Transistor 2.1 sich verringert und sich die Grenzfrequenz für den positiven Strompuls erhöht. Einfach gesagt, die Spannungsänderung 6.1 am Kollektor von Transistor 2.2 beschleunigt sich selbst.

Da auch kein Strom dem Basisstrom entgegenwirkt, wird bei einem positiven Stromstoß der volle Verstärkungsfaktor bei gleichzeitig verminderter kapazitiver Gegenkopplung erreicht. Bei einem negativen Stromstoß würde die Spannung am Kollektor von Transistor 2.2 ansteigen. Dies kann aber aufgrund des beschränkten Stromflusses durch den hochohmigen Widerstand 2.3 und der am Kollektor angeschlossenen Kapazitäten, sowie der eigenen Kollektorkapazität nur langsam geschehen (6.2 in Fig. 6). Ein negativer Stromstoß, der ja mit einer Spannungsabnahme an der Basis von Transistor 2.2 einhergeht, wird über Transistor 2.1 "niederohmig" ausgeregelt bzw. Kondensator 1.3 wird entsprechend umgeladen. Dabei erhöht sich die Spannung am Kollektor von Transistor 2.2 nur unwesentlich.

Transistor 2.5, 2.6 und Widerstand 2.7 sind gleich der ersten Verstärkerstufe aufgebaut, jedoch mit P-anstelle der N-Transistoren, da ja hier ein negatives Signal verstärkt werden soll. Das Ausgangssignal dieser zweiten Verstärkerstufe ist in Linie 6.3 in Fig. 6 dargestellt. Ansonsten sind die Vorteile - von der Signalgröße abhängige frequenzbestimmende Gegenkopplung - gleich. Die Kondensatoren 2.4 und 2.8 dienen nur der DC-Entkopplung und haben Werte von z.B. 100 pF.

Bei einer Versorgungsspannung von 1,8 Volt liegen somit 0,8 Volt jeweils an den Widerständen 2.3 und 2.7 an. Dies entspricht einem Strom von je 36,3 nA, also insgesamt von 72.6 nA für diese Verstärkerstufen. Ein nennenswerter Gleichstrom im Schalttransistor 2.10 fällt nicht an, da er nur bei erkanntem Signal kurz durchgeschaltet wird und das Ausgangssignal 2.11 abgibt, dargestellt durch die abfallende Flanke 2.11 in Fig. 6.

Zusammengerechnet ergibt sich für die Photostromkompensation 1.0 und den Verstärker 2.0 ein Gesamtstrom von 94 nA plus 72,6 nA, also insgesamt 166 nA. Die Praxis hat gezeigt, auch bei Temperaturen bis über 85 Grad Celsius bleibt der Strom auf jeden Fall unter 180 nA.

Durch das einfache Schaltungsdesign sind auch latch-up Effekte ausgeschlossen.

Auf einen optischen Eingangsimpuls von einigen µ-Sekunden Länge oder einen Funkimpuls reagiert der hier beschriebene Stromrichtungsverstärker 2.0 innerhalb von 100 Nanosekunden und ist somit als Aufweckeinheit 3.0 bzw. -schaltung zum Aufwecken der eigentlichen Transponderfunktion mit einem extrem geringen Eigenstromverbrauch bei voller Photostromkompensation bis über 100 kLux geeignet. In der Praxis konnten damit Reichweiten von über 10 Meter problemlos erreicht werden. Natürlich können bei gewünschter höherer Empfindlichkeit auch mehrere Verstärkerstufen hintereinandergeschaltet werden.

Fig. 6 zeigt den weiteren Signalablauf. Die Darstellung im Bereich 6.5 stellen die Transpondersignale dar, die Darstellung im Bereich 6.10 die Signale des Lesegerätes. Der besseren Übersicht halber wurden die sendenden Signale 6.6, 6.8 und 6.12 "eckig" dargestellt, die jeweils empfangenen Signale 6.7, 6.11 und 6.13 höhergestellt und "verschliffen".

Wurde durch die fallende Flanke der Transponder aktiviert, sendet er zunächst eine Kennung 6.6 von z.B. 4 Bit aus. Ein Bit hat dann z. B. eine Länge von je 30 Nanosekunden. Dieses kurze Bitmuster 6.6 wird vom Lesegerät empfangen (6.11) und sagt dem Lesegerät, das jetzt ein Transponder sein Signal 4.11 erkannt hat. Bedarfsweise kann das Lesegerät jetzt die Aussendung des Signals 4.11 stoppen, angedeutet durch die Hinweislinie 6.14 auf die fallende Flanke 6.15. Somit wird nur der sich dem Lesegerät am nächsten befindliche Transponder erkannt. Sollen mehrere Transponder gleichzeitig erkannt werden, braucht das optische Signal nicht gestoppt zu werden, es wird dann mit der vollen Länge 6.16 von z.B. 30 µs ausgesandt. Somit werden auch weiter entfernte Transponder angesprochen. In dem gewünschten Fall, das mehrere Transponder gleichzeitig erfasst werden sollen, können die Transponder so konfiguriert sein (per Software), dass sie nicht sofort nach Erkennen des optischen Signals 4.11 ihre Kennung 6.6 aussenden, sondern zufallsgesteuert zu einem verzögerten Zeitpunkt, um Kollisionen zu vermeiden.

Angenommen, man verwendet eine heute für aktive RFID-Transponderanwendungen übliche kleine Knopfzelle mit 220 mA/ Std, so ergibt sich bei Anwendung der hier vorgestellten Technologie rein rechnerisch eine Lebensdauer der Batterie von 125 Jahren. Nimmt man den durchschnittlich zu erwartenden Datenverkehr zu 1 x pro Sekunde mit einer Länge von 100µs an, was schon sehr hoch gegriffen ist, und bei einem dann entstehenden Durchschnittsstromverbrauch von 1 µA für den Datenaustausch, beträgt die berechnete Batterielebenszeit immer noch mehr als 20 Jahre.

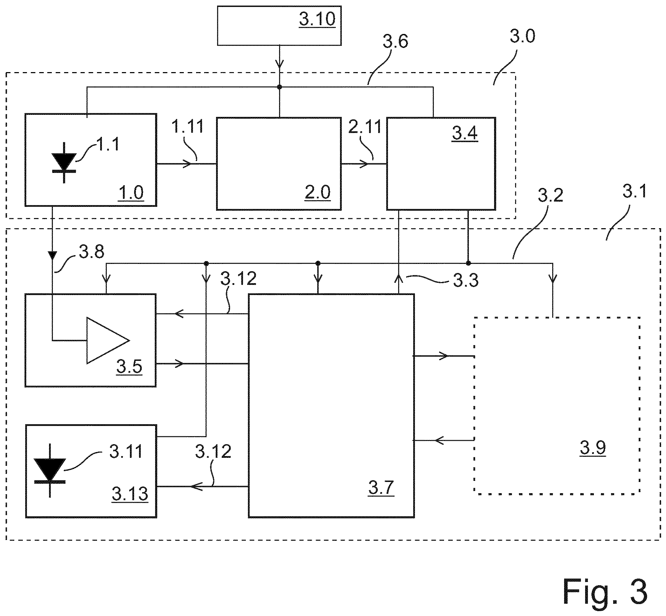

Fig. 3 zeigt das Blockschaltbild für einen optischen Transponder. 3.10 ist die Energieversorgung. Dies kann eine Batterie sein, ein Akku, ein Kondensator, eine Solarzelle oder eine Kombination aus diesen Elementen. 3.1 ist die Transpondereinheit, die auch für den eigentlichen Datenaustausch zuständig ist und daher auch als Datenaustauscheinheit angesprochen werden kann.

Grundsätzlich müssen Aufweckeinheit 3.0 und Datenaustauscheinheit 3.1 nicht vollständig getrennt ausgebildet sein. Es ist z.B. möglich, dass ein Teil der Aufweckeinheit auch Teil der Datenaustauscheinheit ist. So kann z.B. der Empfänger 4.4 des Transponders 4.1 sowohl Empfänger für das Signal 4.11 zum Aufwecken als der Empfänger für die bidirektionale Datenkommunikation sein.

1.1 ist die bereits beschriebene Photodiode mit Photostromkompensation 1.0 zur Detektion des optischen Signals 4.11. Die Signalspannung 1.11 der Photodiode 1.1 wird dem Stromrichtungsverstärker 2.0 zugeführt. Das Ausgangssignal 2.11 des Schalttransistors 2.10 wird einem Flip Flop 3.4 zugleitet. Wurde ein Signal 4.11 erkannt, schaltet der Flip Flop 3.4 die ungeschaltete Versorgungsspannung 3.6 aus der Energieversorgung 3.10 auf die Versorgungsleitung 3.2 für den bidirektionalen Transponderbetrieb. Diese versorgt den Vorverstärker 3.5 für den Datenempfang, die Sendeeinheit, die Datenauswertung und Steuereinheit 3.7 und den gestrichelt gezeichneten optionalen Datenspeicher 3.9. Dieser kann bei größeren Datenvolumen, wie sie z.B. bei Speicherung biometrischer Daten anfallen, verwendet werden. Die Datenauswertung und Steuereinheit 3.7 wird im Ausführungsbeispiel durch einen FPGA gebildet. Über die Steuerleitungen 3.12 werden Vorverstärker 3.5 bzw. LED-Treiber 3.13 für die Datenaussendung zum jeweils richtigen Zeitpunkt aktiv geschaltet.

Der bidirektionale optische Transponderbetrieb wurde bereits im Patent EP 2 332 269 B1 ausführlich beschrieben, so dass hier nicht näher auf die Funktion eingegangen werden muss. Ihr Inhalt wird jedoch durch Bezug auf jenes Patent hiermit ausdrücklich auch zum Gegenstand der vorliegenden Anmeldung gemacht.

Nach erfolgter bidirektionaler Datenübertragung setzt die Steuereinheit 3.7 über die Rücksetzleitung 3.3 den Flip Flop 3.4 zurück, so dass die Transpondereinheit 3.1 als Datenaustauscheinheit wieder spannungsfrei wird. Im Ausführungsbeispiel ist dem Vorverstärker 3.5 keine eigene Photodiode zum Empfang schneller Datensignale zugeordnet, denn dazu kann auch das Datensignal aus der Photodiode 1.1 entnommen werden, dargestellt durch die Signalleitung 3.8.

Zusätzlich kann anstelle des in Figur 4a dargestellten Signals 4.11 auch ein in Fig. 4c dargestelltes Funksignal 4.12 verwendet werden, um die bidirektionale Datenübertragung zu beginnen. Ebenso kann die bidirektionale Datenübertragung auch per Funk erfolgen. Dazu kann anstelle der Signalspannung 1.11 der Photodiode 1.1 eine entsprechende Ausgangsspannung eines in Fig. 4c dargestellten Funkempfängers 4.13 zum Empfangen des Funksignals 4.12 dem in Fig. 3 dargestellten Stromrichtungsverstärker 2.0 und/oder je nach Signalstärke direkt dem Flip Flop 3.4 zur Ansteuerung zugeführt werden.

Fig. 4c zeigt eine alternative Ausgestaltung des Lesegeräts 4.5 und des optischen Transponders 4.1 oder ganz allgemein eines Transponders z.B. für Funksignale. Der Transponder 4.1 weist zusätzlich den Funkempfänger 4.13 und das Lesegerät 4.5 zusätzlich einen Funksender 4.14 auf. Mittels des Funksenders wird analog des vorab beschriebenen Signals 4.11 das Funksignal 4.12 ausgesendet. Dies kann mit einer begrenzten Reichweite erfolgen, um möglicherweise damit einhergehende unerwünschte Wirkungen zu minimieren. Insbesondere kann die Reichweite auf eine Reichweite der bidirektionalen Datenübertragung angepasst sein. Das Funksignal 4.12 kann mittels des Funkempfängers 4.13 empfangen werden und zum Starten der optischen bidirektionalen Datenübertragung oder einer Funkübertragung, alternativ zusätzlich auch zum wieder Umschalten des Transponders 4.1 in einen energiesparenden Bereitschaftszustand, insbesondere durch Abschalten der Versorgungsspannung, verwendet werden. Sobald sich der Transponder 4.1 dem Lesegerät 4.5 nähert, kann dieser durch das Funksignal 4.12 wie vorab beschrieben in einen betriebsbereiten Zustand versetzt werden. Optional kann auch das Funksignal 4.12 getaktet ausgesendet werden, insbesondere um Energie einzusparen und/oder einen Funkverkehr zu reduzieren.

Gemäß einer weiteren Alternative kann durch das Funksignal 4.12 Energie von dem insbesondere an die Netzversorgung 4.7 angeschlossenen Lesegerät 4.5 auf den Transponder 4.1 übertragen werden. Diese Energie kann von dem Transponder 4.1 für die laufende Datenübertragung verwendet werden und/oder für eine spätere Bereitschaftsphase gespeichert werden. Die Energieübertragung kann insbesondere bereits vor Beginn der Datenübertragung erfolgen, um diese sofort mit der notwendigen Energie zu versorgen. Alternativ oder zusätzlich ist es denkbar, die Energieversorgung über das Funksignal 4.12 während der Datenübertragung aufrecht zu erhalten. Durch die zusätzliche Möglichkeit des Aufweckens des Transponders mittels des Funksignals 4.12 kann die Sicherheit der Datenübertragung erhöht werden. Dazu kann, insbesondere wahlweise, eine der beiden Aufweckmöglichkeiten, deaktiviert werden. Insbesondere ist es möglich, dass eine Kommunikation nur dann zustande kommt, wenn sowohl eine Kommunikation über eine Funkstrecke und die eigentliche Datenkommunikation über eine optische Strecke erfolgen. Außerdem kann vorgesehen sein, dass zum Starten der bidirektionalen Kommunikation sowohl ein optisches Signal 4.11 als auch ein Funksignal 4.12 erforderlich sind.

**Bezugszeichenliste**

| | | | |
|---|---|---|---|
| 1.0 | Photostromkompensation | 4.1 | optischer Transponder |
| 1.1 | Photodiode (BPW 34 o.ä.) | 4.2 | optische Signale, Kennung |
| 1.2 | Feldeffekttransistor (BSS 123 o.ä.) | 4.3 | optischer Sender (Leuchtdiode) |
| 1.3 | Koppelkondensator | 4.4 | Empfänger für optische Signale |
| 1.4 | Widerstand | 4.5 | Lesegerät für optischen Transponder |
| 1.5 | Tiefpasskondensator | 4.6 | Empfänger des Lesegerätes |
| 1.6 | Widerstand | 4.7 | Netzversorgung |
| 1.7 | Widerstand | 4.8 | Datenverkehr |
| 1.8 | NPN Transistor (BC 848 o.ä.) | 4.9 | optischer Sender |
| 1.9 | NPN Transistor (BC 848 o.ä.) | 4.10 | optische Signale |
| 1.10 | Widerstand | 4.11 | optisches Signal, z.B. 1 Bit, z.B. 20.000 mal/Sekunde |
| 1.11 | Signalspannung der Photodiode | | |
| 2.0 | Stromrichtungsverstärker | 4.12 | Funksignal |
| 2.1 | Transistor | 4.13 | Funkempfänger |
| 2.2 | Transistor | 4.14 | Funksender |
| 2.3 | Widerstand | 5.1 | Solarzelle oder Photodioden |
| 2.4 | Koppelkondensator | 5.2 | Gyrator |
| 2.5 | Transistor | 5.3 | Reversediode |
| 2.6 | Transistor | 5.4 | Widerstand |
| 2.7 | Widerstand | 5.6 | Energiespeicher |
| 2.8 | Koppelkondensator | 5.7 | Versorgungsspannung |
| 2.9 | Widerstand | 5.8 | Spannung bei Lichteinstrahlung |
| 2.10 | Schalttransistor | 6.1 | Sinkende Spannung am Kollektor von 2.2 |
| 2.11 | Ausgangssignal von 2.10 | | |
| 2.12 | Widerstand | 6.2 | langsam ansteigende Spannung am |
| 3.0 | Aufweckeinheit | | Kollektor von 2.2 |
| 3.1 | Transpondereinheit / Datenaustauscheinheit | 6.3 | Ausgangssignal der zweiten Verstärkerstufe |
| 3.2 | Versorgungsleitung für Transponderbetrieb | 6.5 | Darstellung Transpondersignale |
| | | 6.6 | gesendete Signale, hier: Kennung, Bitmuster |
| 3.3 | Rücksetzleitung | | |
| 3.4 | Flip Flop | 6.7 | Empfangenes Signal |
| 3.5 | Vorverstärker für den Datenempfang | 6.8 | gesendetes Signal |
| 3.6 | ungeschaltete Versorgungsspannung | 6.10 | Darstellung Signale des Lesegerätes |
| 3.7 | Datenauswertung und Steuereinheit | 6.11 | Empfangenes Signal |
| 3.8 | Signalleitung | 6.12 | gesendetes Signal |
| 3.9 | Optionaler Datenspeicher | 6.13 | Empfangenes Signal |
| 3.10 | Energieversorgung | 6.14 | Hinweislinie |
| 3.11 | Sendediode für Transponderbetrieb | 6.15 | Fallende Flanke |
| 3.12 | Steuerleitung | 6.16 | Optisches Signal 4.11 voller Länge |
| 3.13 | LED-Treiber | | |

## Patentansprüche

1. Transponder (4.1) mit wenigstens einer Aufweckeinheit (3.0) und wenigstens einer Datenaustauscheinheit (3.1) zur bidirektionalen Datenkommunikation mit wenigstens einem Lesegerät (4.5), insbesondere zur Erfassung und/oder Steuerung einer Zugangsberechtigung zu Räumen oder Objekten, wobei der Transponder wenigstens einen Daten aussendenden Sender (4.3) und wenigstens einen Empfänger (4.4) aufweist, wobei der Sender (4.3) zumindest zeitabschnittsweise Signale selbsttätig aussendet,
**dadurch gekennzeichnet, dass** der Transponder (4.1) wenigstens eine Photodiode (1.1) aufweist und dass die wenigstens eine Aufweckeinheit (3.0) eine optische Aufweckeinheit ist, die dauerhaft für Signale (4.11) zum Start der Datenkommunikation mittels der Datenaustauscheinheit (3.1) zwischen Transponder und Lesegerät (4.5) empfangsbereit ist.

2. Transponder nach Anspruch 1, **dadurch gekennzeichnet, dass** die Datenaustauscheinheit (3.1) wenigstens eine optische Datenaustauscheinheit umfasst.

3. Transponder nach Anspruch 1, **dadurch gekennzeichnet, dass** die Datenaustauscheinheit (3.1) wenigstens eine Funkdatenaustauscheinheit umfasst.

4. Transponder nach einem der vorhergehenden Ansprüche, **dadurch gekennzeichnet, dass** der Transponder (4.1) wenigstens eine Stromrichtungsverstärkerschaltung (2.0) aufweist, die vorzugsweise sich selbst regelnde, unlineare Einzelstufen umfasst.

5. Transponder nach einem der vorhergehenden Ansprüche, **dadurch gekennzeichnet, dass** der Transponder (4.1) wenigstens eine Stromsparschaltung aufweist.

6. Transponder nach Anspruch 5, **dadurch gekennzeichnet, dass** die Stromsparschaltung eine Photostromkompensation (1.0) durch Begrenzung der Photodioden-Generatorspannung der wenigstens einen Photodiode (1.1) zwischen Null und Sättigung durch Bedämpfung mit einem frequenzabhängigen Widerstand aufweist oder durch Kompensation mit dem Strom aus einer Anzahl weiterer, elektrisch entgegengesetzt gepolter Photodioden (5.1) mittels frequenzabhängigem Widerstand aufweist.

7. Transponder nach einem der Ansprüche 5 oder 6, **dadurch gekennzeichnet, dass** die Stromsparschaltung dazu bestimmt und geeignet ist, die Aufweckeinheit (3.0) mit einer Batterie, vorzugsweise einer Knopfzelle, trotz der dauerhaften Signalempfangsbereitschaft mehrere Jahre zu betreiben.

8. Transponder nach einem der vorhergehenden Ansprüche, **dadurch gekennzeichnet, dass** der Transponder (4.1) von wenigstens einer Solarzelle mit Energie versorgbar ist.

9. Transponder nach einem der Ansprüche 4 bis 8, **dadurch gekennzeichnet, dass** die Zeit vom Empfang eines Signals der Aufweckeinheit (3.0) bis zum Start der gerichteten Datenkommunikation der Datenaustauscheinheit (3.1) zwischen Transponder und Lesegerät mit Hilfe der Stromrichtungsverstärkerschaltung (2.0) kürzer als eine Mikrosekunde, vorzugsweise kleiner als 200 Nanosekunden ist.

10. Anordnung zur bidirektionalen Kommunikation zwischen einem Transponder (4.1) nach einem der Ansprüche 1 bis 9 und wenigstens einem Lesegerät (4.5), das Signale (4.11) zum Start der Datenkommunikation an eine dauerhaft empfangsbereite Aufweckeinheit des Transponders (4.1) sendet zum Aufwecken einer Datenaustauscheinheit (3.1) des Transponders (4.1).

11. Verfahren zur bidirektionalen Datenkommunikation eines Transponders (4.1) mit wenigstens einem Lesegerät (4.5), insbesondere zur Erfassung und/oder Steuerung einer Zugangsberechtigung zu Räumen oder Objekten, wobei der Transponder wenigstens einen Daten aussendenden Sender (4.3) und wenigstens einen Empfänger (4.4) aufweist, mit den Schritten
- Senden eines Signals (4.10, 4.11) vom Lesegerät (4.5) zum Transponder (4.1),
- Erkennen des Signals (4.10, 4.11) durch den Transponder (4.1).
- Starten einer bidirektionalen Kommunikation mittels wenigstens einer Datenaustauscheinheit (3.1) mit Sender (4.3) und Empfänger (4.4) des Transponders (4.1), wobei der Sender (4.3) zumindest zeitabschnittsweise Signale selbsttätig aussendet,
**gekennzeichnet, durch** ein Aufwecken der Datenaustauscheinheit (3.1) zum Start der bidirektionalen Kommunikation nach Erkennen des Signals (4.10, 4.11) durch eine dauerhaft empfangsbereite, optische Aufweckeinheit (3.0) des Transponders (4.1), wobei der Transponder (4.1) mittels wenigstens einer Photodiode (1.1) betrieben wird.

12. Verfahren nach Anspruch 11, **dadurch gekennzeichnet, dass** der Strom des vom Transponder empfangenen Signals (4.10, 4.11) im Transponder im Wesentlichen nur in eine Richtung verstärkt wird.

13. Verfahren nach Anspruch 11 oder 12, **dadurch gekennzeichnet, dass** als Stromsparschaltung eine Photostromkompensation (1.0) eine Photodioden-Generatorspannung zwischen Null und Sättigung durch Bedämpfung mit einem frequenzabhängigen Widerstand begrenzt oder einen Strom mit dem Strom aus einer Anzahl weiterer, elektrisch entgegengesetzt gepolter Photodioden (5.1) mittels eines frequenzabhängigen Widerstands kompensiert.

14. Verfahren nach Anspruch 13, **dadurch gekennzeichnet, dass** mittels der Stromsparschaltung die optische Aufweckeinheit (3.0) mit einer Batterie, vorzugsweise einer Knopfzelle, trotz der dauerhaften Signalempfangsbereitschaft mehrere Jahre betrieben wird.

15. Verfahren nach einem der Ansprüche 11 bis 14, **dadurch gekennzeichnet, dass** der Transponder von wenigstens einer Solarzelle mit Energie versorgt wird.

16. Verfahren nach einem der Ansprüche 11 bis 15, **dadurch gekennzeichnet, dass** die bidirektionale Datenkommunikation in einer Zeit vom Empfang eines Signals der Aufweckeinheit (3.0) von weniger als einer Mikrosekunde, vorzugsweise kleiner als 200 Nanosekunden mit Hilfe einer Stromrichtungsverstärkerschaltung (2.0) gestartet wird.

## Claims

1. Transponder (4.1) comprising at least one wake-up unit (3.0) and at least one data exchange unit (3.1) for bidirectional data communication with at least one reading device (4.5), in particular for acquiring and/or controlling an access authorisation to spaces or objects, wherein the transponder comprises at least one data-emitting transmitter (4.3) and at least one receiver (4.4), wherein the transmitter (4.3) transmits signals automatically at least during some time periods,
**characterised in that** the transponder (4.1) comprises at least one photodiode (1.1) and that the at least one wake-up unit (3.0) is an optical wake-up unit, which is continuously ready to receive signals (4.11) for the start of the data communication by means of the data exchange unit (3.1) between the transponder and the reading device (4.5).

2. Transponder according to claim 1, **characterised in that** the data exchange unit (3.1) comprises at least one optical data exchange unit.

3. Transponder according to claim 1, **characterised in that** the data exchange unit (3.1) comprises at least one radio data exchange unit.

4. Transponder according to one of the preceding claims, **characterised in that** the transponder (4.1) comprises at least one current sense amplifier circuit (2.0) which preferably comprises self-regulating non-linear individual stages.

5. Transponder according to one of the preceding claims, **characterised in that** the transponder (4.1) comprises at least one current-saving circuit.

6. Transponder according to claim 5, **characterised in that** the current-saving circuit has a photocurrent compensation (1.0) by limiting the photodiode generator voltage of the at least one photodiode (1.1) between zero and saturation by damping with a frequency-dependent resistor or by means of compensation with the current from a number of further electrically oppositely poled photodiodes (5.1) by means of a frequency-dependent resistor.

7. Transponder according to one of the claims 5 or 6, **characterised in that** the current-saving circuit is configured and adapted to operate the wake-up unit (3.0) with a battery, preferably a button cell, for several years despite the continuous signal reception readiness.

8. Transponder according to one of the preceding claims, **characterised in that** the transponder (4.1) is suppliable with energy from at least one solar cell.

9. Transponder according to one of the claims 4 to 8, **characterised in that** the time from the receipt of a signal of the wake-up unit (3.0) until the start of the directional data communication of the data exchange unit (3.1) between the transponder and the reading device with the aid of the current direction amplifier circuit (2.0) is less than one microsecond, preferably less than 200 nanoseconds.

10. Arrangement for bidirectional communication between a transponder (4.1) according to one of the claims 1 to 9 and at least one reading device (4.5) which transmits signals (4.11) at the start of the data communication to a continuously receptive wake-up unit of the transponder (4.1) to wake up a data exchange unit (3.1) of the transponder (4.1).

11. Method for bidirectional data communication of a transponder (4.1) with at least one reading device (4.5), in particular for acquiring and/or controlling an access authorisation to spaces or objects, wherein the transponder comprises at least one data-emitting transmitter (4.3) and at least one receiver (4.4), comprising the steps
- sending a signal (4.10, 4.11) from the reading device (4.5) to the transponder (4.1),
- recognising the signal (4.10, 4.11) by the transponder (4.1),
- starting of a bidirectional communication by means of at least one data exchange unit (3.1) with the transmitter (4.3) and the receiver (4.4) of the transponder (4.1), wherein the transmitter (4.3) automatically emits signals at least during some time periods,
**characterised by** a waking up of the data exchange unit (3.1) for the start of the bidirectional communication following recognition of the signal (4.10, 4.11) by means of a continuously reception-ready optical wake-up unit of the transponder (4.1), wherein the transponder (4.1) is operated by at least one photodiode (1.1).

12. Method according to claim 11, **characterised in that** the current of the signal (4.10, 4.11) received by the transponder is amplified in the transponder essentially only in one current sense direction.

13. Method according to claim 11 or 12, **characterised in that** as the current-saving circuit, a photocurrent compensation (1.0) limits a photodiode generator voltage between zero and saturation by damping with a frequency-dependent resistor or compensates for a current with the current from a number of further electrically oppositely poled photodiodes (5.1) by means of a frequency-dependent resistor.

14. Method according to claim 13, **characterised in that** by means of the current-saving circuit the optical wake-up unit (3.0) is operated with a battery, preferably a button cell, for several years despite the continuous signal reception readiness.

15. Method according to one of the claims 11 to 14, **characterised in that** the transponder is supplied with energy from at least one solar cell.

16. Method according to one of the claims 11 to 15, **characterised in that** the bidirectional data communication is started with the aid of the current direction amplifier circuit (2.0) in a time from the receipt of a signal of the wake-up unit (3.0) of less than one microsecond, preferably less than 200 nanoseconds.

## Revendications

1. Transpondeur (4.1) ayant au moins une unité de réveil (3.0) et au moins une unité d'échange de données (3.1) pour une communication de données bidirectionnelle avec au moins un appareil de lecture (4.5), en particulier pour l'acquisition et/ou la commande d'un droit d'accès à des espaces ou objets, dans lequel le transpondeur comprend au moins un émetteur (4.3) envoyant des données et au moins un récepteur (4.4), l'émetteur (4.3) envoyant des signaux de manière autonome au moins de manière intermittente,
**caractérisé en ce que** le transpondeur (4.1) comprend au moins une photodiode (1.1) et **en ce que** l'unité de réveil (3.0) est une unité de réveil optique, laquelle est prête à recevoir de façon durable des signaux (4.11) pour le démarrage de la communication de données au moyen de l'unité d'échange de données (3.1) entre le transpondeur et l'appareil de lecture (4.5).

2. Transpondeur selon la revendication 1, **caractérisé en ce que** l'unité d'échange de données (3.1) comprend au moins une unité d'échange de données optique.

3. Transpondeur selon la revendication 1, **caractérisé en ce que** l'unité d'échange de données (3.1) comprend au moins une unité d'échange de données par radio.

4. Transpondeur selon l'une des revendications précédentes, **caractérisé en ce que** le transpondeur (4.1) comporte au moins un circuit de renforcement de direction de courant (2.0), lequel comprend de préférence des étapes individuelles non linéaires et autoréglables.

5. Transpondeur selon l'une des revendications précédentes, **caractérisé en ce que** le transpondeur (4.1) comprend au moins un circuit économiseur de courant.

6. Transpondeur selon la revendication 5, **caractérisé en ce que** le circuit économiseur de courant comprend une compensation de courant photoélectrique (1.0) par limitation de la tension du générateur - des photodiodes de la ou des photodiode(s) (1.1) entre zéro et la saturation, par amortissement avec une résistance dépendant de la fréquence ou par compensation avec le courant provenant d'une pluralité de photodiodes supplémentaires à polarisation inversée électriquement (5.1), au moyen de la résistant dépendant de la fréquence.

7. Transpondeur selon l'une des revendications 5 et 6, caractérisé en que le circuit économiseur de courant est prévu et apte à alimenter l'unité de réveil (3.0) avec une batterie, de préférence une pile bouton, pendant plusieurs années, malgré l'aptitude à recevoir des signaux de façon durable.

8. Transpondeur selon l'une des revendications précédentes, **caractérisé en ce que** le transpondeur (4.1) peut être alimenté en énergie par au moins une cellule solaire.

9. Transpondeur selon l'une des revendications 4 à 8, **caractérisé en ce que** le temps entre la réception d'un signal de l'unité de réveil (3.0) jusqu'au démarrage de la communication de données dans une direction par l'unité d'échange de données (3.1), entre le transpondeur et l'appareil de lecture à l'aide du circuit de renforcement de direction du courant (2.0), est inférieur à une microseconde, de préférence inférieur à 200 nanosecondes.

10. Dispositif pour la communication bidirectionnelle entre un transpondeur (4.1) selon l'une des revendications 1 à 9 et au moins un appareil de lecture (4.5), lequel envoie des signaux (4.11) pour le démarrage de la communication de données à une unité de réveil du transpondeur (4.1) prête à la réception de façon durable, en vue du réveil d'une unité d'échange de données (3.1) du transpondeur (4.1).

11. Procédé pour la communication de données bidirectionnelle d'un transpondeur (4.1) avec au moins un appareil de lecture (4.5), en particulier pour l'acquisition et/ou la commande d'un droit d'accès à des espaces ou objets, le transpondeur comprenant au moins un émetteur envoyant des données (4.3) et au moins un récepteur (4.4), comportant les étapes consistant à :
- émettre un signal (4.10, 4.11) de l'appareil de lecture (4.5) au transpondeur (4.1),
- reconnaissance du signal (4.10, 4.11) par le transpondeur (4.1),
- démarrage d'une communication bidirectionnelle au moyen d'au moins une unité d'échange de données (3.1) avec l'émetteur (4.3) et le récepteur (4.4) du transpondeur (4.1), l'émétteur (4.3) envoyant de manière autonome des signaux, au moins de manière intermittente, **caractérisé en ce qu'**au moyen d'un réveil de l'unité d'échange de données (3.1) pour le démarrage de la communication bidirectionnelle après la reconnaissance du signal (4.10, 4.11) à l'aide d'une unité de réveil optique du transpondeur (4.1) prête à la réception de façon durable, dans lequel le transpondeur (4.1) est alimenté au moyen d'au moins une photodiode (1.1).

12. Procédé selon la revendication 11, **caractérisé en ce que** le courant du signal reçu par le transpondeur (4.10, 4.11) est renforcé dans le transpondeur essentiellement dans une direction.

13. Procédé selon la revendication 11 ou 12, **caractérisé en ce qu'**en tant que circuit économiseur de courant, une compensation de courant photoélectrique (10) limite une tension de générateur - de photodiodes entre zéro et la saturation, par amortissement avec une résistance dépendant de la fréquence, ou compense un courant avec le courant provenant d'une pluralité de photodiodes (5.1) supplémentaires à polarisation inversée électriquement, au moyen d'une résistance dépendant de la fréquence.

14. Procédé selon la revendication 13, **caractérisé en ce que** l'unité de réveil optique (30) est alimentée avec une batterie, de préférence une pile bouton, au moyen du circuit d'économie de courant pendant plusieurs années, malgré l'aptitude à recevoir des signaux de façon durable.

15. Procédé selon l'une des revendications 11 à 14, **caractérisé en ce que** le transpondeur est alimenté en énergie par au moins une cellule solaire.

16. Procédé selon l'une des revendications 11 à 15, **caractérisé en ce que** la communication de données bidirectionnelle est démarrée en un temps, à partir de la réception d'un signal de l'unité de réveil (3.0), inférieur à une microseconde, de préférence inférieur à 200 nanosecondes, au moyen d'un circuit de renforcement de direction du courant (2.0).
